# EUROPEAN PATENT SPECIFICATION

(11) **EP 3 385 621 B1**
(45) Date of publication and mention of the grant of the patent: **29.01.2020**
(21) Application number: 18163908.9
(22) Date of filing: 26.03.2018
(51) Int. Cl.: F23R 3/00, F23R 3/60

(54) **COMBUSTOR PANEL COOLING**
BRENNKAMMER HITZESCHILD KÜHLUNG
REFROIDISSEMENT D'UN BOUCLIER THERMIQUE

(30) Priority: 05.04.2017 US 201715479981
(43) Date of publication of application: 10.10.2018
(73) Proprietor: United Technologies Corporation, Farmington, CT 06032 (US)
(72) Inventor: PORTER, Steven D, Wethersfield, Connecticut 06109 (US); LEMOINE, Jonathan, Vernon, Connecticut 06066 (US); ZACCHERA, Kevin, Glastonbury, Connecticut 06033 (US)
(74) Representative: Dehns

(56) References cited:
- WO-A1-2015/094531
- US-A1- 2015 096 302
- US-A1- 2016 273 770

## Description

### FIELD

The present disclosure relates to cooling structures for gas turbine engines, and, more specifically, to combustor panels used in a combustor of a gas turbine engine.

### BACKGROUND

A gas turbine engine typically includes a fan section, a compressor section, a combustor section, and a turbine section. A fan section may drive air along a bypass flowpath while a compressor section may drive air along a core flowpath. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads.

Combustors used in gas turbine engines rely on combustor panels as thermal shields and to guide combustion gases into the turbine. These combustor panels interface with hot combustion gases and are often susceptible to structural damage and/or oxidation caused by the high temperature of the combustion gases. The structural damage and/or oxidation of the combustor panels may result in the combustor having a short operational life.

US 2016/0273770 A1 discloses a combustor floatwall panel including a stack of layers of a sintered material forming in the aggregate a panel, an attachment stud, and a cooling flow passageway extending through the attachment stud.

### SUMMARY

From a first aspect of the invention, a combustor panel of a combustor as claimed in claim 1 is provided.

In various embodiments, the first channel may include an internal flow control feature. The internal flow control feature may comprise at least one of a trip strip or a bump. The first channel may include a first cross sectional area having a first diameter and a second cross sectional area having a second diameter. The second diameter may be greater than the first diameter. The first channel may comprise a plurality of outlets in the combustion facing surface. A cooling airflow may exit the first channel through the plurality of outlets and is directed along the combustion facing surface. The first channel and the second channel may form a helical flow path. The attachment feature may comprise an attachment stud. A cooling hole may be defined by the combustor panel in a first area away from the attachment feature. The cooling hole may direct a cooling airflow over a second area of the combustion facing surface away from the first area.

From a further aspect, a combustor of a gas turbine engine as claimed in claim 8 is also provided.

In various embodiments, the first channel may comprise a plurality of outlets in a combustion facing surface of the combustor panel. A cooling airflow may exit the first channel through the plurality of outlets and is directed along the combustion facing surface. The first channel may comprise an internal flow control feature, the internal flow control feature comprising at least one of a trip strip or a bump. The second channel may be formed completely through the attachment feature. The first channel and the second channel may form a helical flow path. The first channel may include a first cross sectional area having a first diameter and a second cross sectional area having a second diameter. The second diameter may be greater than the first diameter. A standoff pin may extend from the combustor panel adjacent to the attachment feature. The cooling airflow may exit the first channel through a first outlet in a combustion facing surface of the combustor panel. The first channel may direct the first cooling airflow over a first area of the combustion facing surface. The first area may be opposite the attachment feature and the standoff pin. A cooling hole may be defined by the combustor panel in a first area away from the attachment feature. The cooling hole may direct a second cooling airflow over a second area of the combustion facing surface away from the first area.

From a further aspect, a gas turbine engine as claimed in claim 14 is provided.

In various embodiments, the first channel comprises a plurality of outlets in a combustion facing surface of the combustor panel, wherein the cooling airflow exits the first channel through the plurality of outlets and is directed along the combustion facing surface. The second channel may be formed completely through the attachment feature. The second channel may be configured to direct the cooling airflow from the outer plenum into the combustor chamber.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the detailed description and claims when considered in connection with the figures, wherein like numerals denote like elements.
FIG. 1 illustrates a cross-sectional view of an exemplary gas turbine engine;
FIG. 2 illustrates a cross-sectional view of a combustor of gas turbine engine;
FIGS. 3A and 3B illustrate views of perspective and cross-sectional views of combustor panel not in accordance with the invention;
FIGS. 4A, 4B, 4C, 4D and 4E illustrate perspective and cross-sectional views of cooling features for a combustor panel not in accordance with the invention;
FIGS. 5A and 5B illustrate perspective and cross-sectional views of cooling features for a combustor panel not in accordance with the invention;
FIGS. 6A, 6B, 6C and 6D illustrate perspective and cross-sectional views of cooling features for a combustor panel in accordance with the invention; and
FIG. 7 illustrates a schematic flowchart diagram of a method of manufacturing a combustor.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that logical, chemical, and mechanical changes may be made without departing from the scope of the invention as defined by the claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Any reference related to fluidic coupling to serve as a conduit for cooling airflow and the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

Any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "aft" refers to the direction associated with the exhaust (e.g., the back end) of a gas turbine engine. As used herein, "forward" refers to the direction associated with the intake (e.g., the front end) of a gas turbine engine. As used herein, "distal" refers to the direction outward, or generally, away from a reference component. As used herein, "proximal" refers to a direction inward, or generally, towards the reference component.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The terminology "radially outward" and "radially inward" may also be used relative to references other than the engine central longitudinal axis. A first component that is "radially outward" of a second component means that the first component is positioned at a greater distance away from the engine central longitudinal axis than the second component. For example, a first component of a combustor that is radially inward or radially outward of a second component of a combustor is positioned relative to the central longitudinal axis of the combustor.

The present invention relates to cooling features for combustor panels. The cooling features may direct a cooling airflow through attachment features, such as attachment studs, of the combustor panels. The cooling features may include cooling channels configured to provide cooling airflow to a hot side of the combustor panels opposite the attachment features. The cooling channels may include flow features, which control the flow characteristics of the cooling airflow to optimize the local film cooling effectiveness. Thus, thermal gradients across the combustor panel can be controlled to improve the durability of the combustor panel. It should be understood that various embodiments may be realized and that logical alterations and modifications to various geometric features described herein may be altered to provide more optimal passage geometries, airflow distributions, and convective cooling characteristics in order to optimize both local and overall thermal cooling effectiveness. Additive manufacturing methods may be used to create and fabricate integral geometric features and/or may provide the ability to tailor specific geometric surfaces, channels, and features that are unique to particular cooling configurations in order to simplify and/or mitigate manufacturing and assembly costs associated with particular designs.

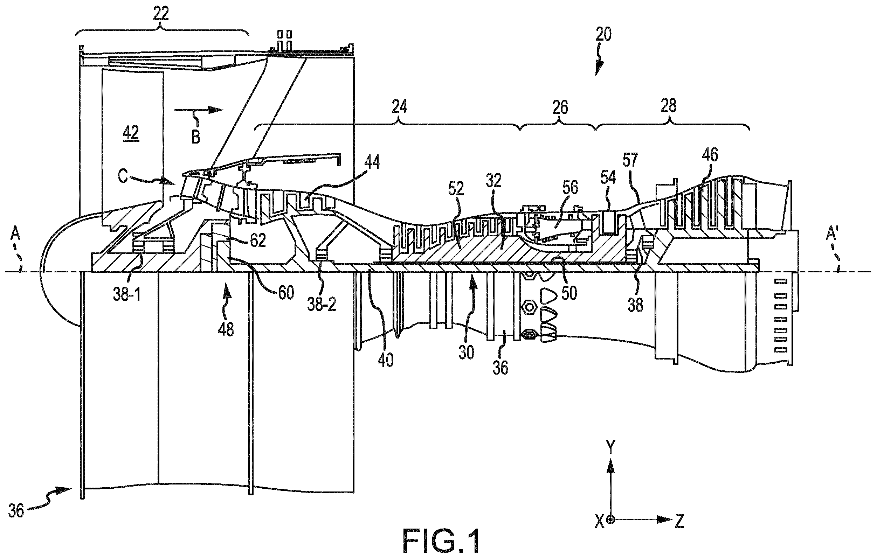

With reference to FIG. 1, a gas turbine engine 20 is shown. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a path of bypass airflow B while compressor section 24 can drive coolant along a path of core airflow C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided x-y-z axes. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present invention contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

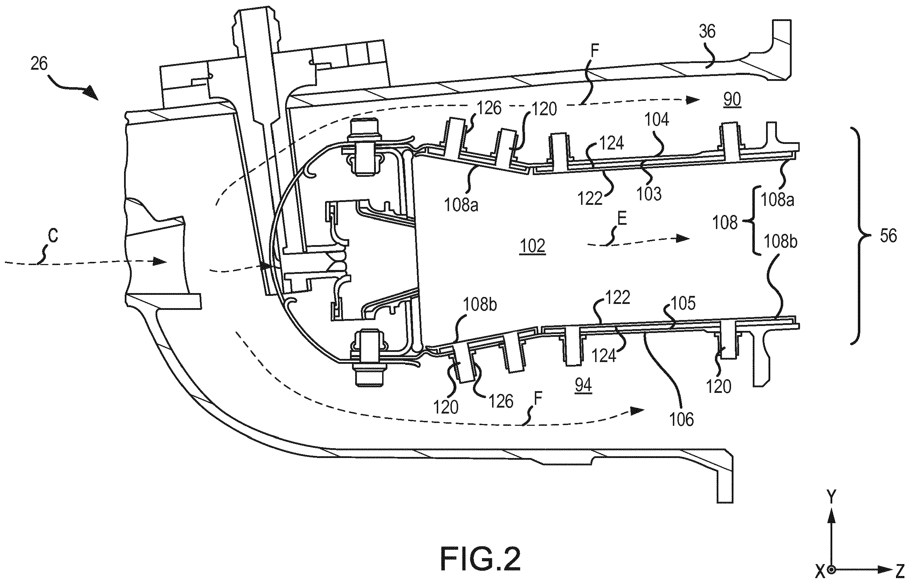

With reference to FIG. 2 and still to FIG. 1, combustor section 26 generally includes a combustor 56, which may be coupled to engine case 36. Combustor 56 may be encased by engine case 36 having an annular geometry and disposed about combustor 56. Combustor 56 may be spaced radially inward from engine case 36 to define an outer plenum 90. Combustor 56 may be further encased by an inner diffuser case 92. Combustor 56 may be spaced radially outward from inner diffuser case 92 to define an inner plenum 94. Combustor 56 may be, for example, an annular combustor, a can-style combustor, or other suitable combustor. Although combustor 56 is illustrated in FIG. 2, for example, an annular combustor, it will be understood that the features in the present invention are not limited to an annular combustor, and may apply to various configurations of combustors or combustor assemblies.

Combustor 56 may comprise a combustor chamber 102 defined by a combustor outer shell 104 and a combustor inner shell 106. Each combustor shell 104, 106 may be generally cylindrical and extend circumferentially about the engine central longitudinal axis A-A'. The combustor outer shell 104 and the combustor inner shell 106 may provide structural support to the combustor 56 and its components. For example, a combustor outer shell 104 and a combustor inner shell 106 may comprise a substantially cylindrical canister portion defining an inner area comprising the combustor chamber 102.

Combustor 56 may be disposed downstream of the compressor section 24 to receive core airflow C therefrom. A portion of core airflow C leaving high pressure compressor 52 may flow into combustion chamber 102 to supply combustor 56 with air for combustion. Another portion of core airflow C may flow around combustor 56 and into outer plenum 90 and/or inner plenum 94, which may define a path of cooling airflow F. Combustion chamber 102 contains combustion products that flow axially toward turbine section 28. Uncombusted gas may be mixed with fuel and burned in combustion chamber 102. Combusted gas in combustor 56 may reach or exceed temperatures of up to 3,500°F (1,925°C) or higher. In that regard, combustor 56 defines a path of hot airflow E. Combustor 56 is thus exposed to high temperature flame and/or gases during the operation of the gas turbine engine 20. It may be desirable to protect the combustor outer shell 104 and the combustor inner shell 106 from the high temperatures of hot airflow E. One or more combustor thermal shields 108 may be disposed inside the combustor chamber 102 and may provide such protection.

In various embodiments, combustor 56 may comprise one or more combustor thermal shields 108 disposed within combustor chamber 102. Combustor thermal shields 108 may be positioned in combustor 56 to protect various features of the combustor 56 from the high temperature flames and/or combustion gases. Combustor thermal shields 108 may comprise a partial cylindrical or conical surface section (e.g., may have a cross-section comprising an arc length). Combustor thermal shields 108 may include one or more outer combustor thermal shields 108a and one or more inner combustor thermal shields 108b. An outer combustor thermal shield 108a may be arranged radially inward of the combustor outer shell 104, for example, circumferentially about an inner surface 103 of the combustor outer shell 104. One or more inner combustor thermal shields 108b may also be arranged radially outward of the combustor inner shell 106. Stated differently, inner combustor thermal shields 108b may be disposed within combustor chamber 102 and radially outward relative to a radially outer surface 105 of combustor inner shell 106.

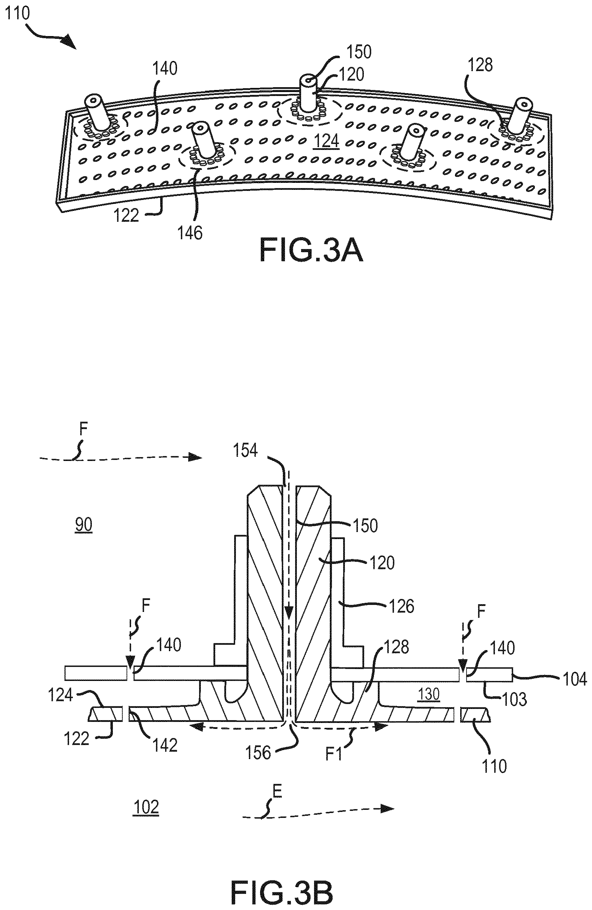

With reference to FIGS. 3A and 3B and still to FIG. 2, the combustor thermal shields 108 may be made from one or more combustor panels 110. Combustor thermal shields 108 may be circumferentially continuous (e.g., ring shaped) and divided axially, or may be divided circumferentially, or may be divided both axially and circumferentially (e.g., substantially rectilinear in shape) into combustor panels 110. The combustor panel 110 may be made from partial cylindrical or conical surface sections. The combustor panels 110 may be directly exposed to the heat and/or flame (i.e., hot airflow E) in the combustor chamber 102. In various embodiments, the combustor panels 110 may include a combustion facing surface 122 and a cooling surface 124 opposite the combustion facing surface 122. Thus, the combustor panels 110 may be made of any suitable heat tolerant material. Combustor thermal shields 108 may comprise a variety of materials, such as metal, metal alloys, and/or ceramic matrix composites, among others. In various embodiments, the combustor panel 110 may be made from a nickel based alloy and/or a cobalt based alloy, among others.

The combustor panels 110 may comprise one or more attachment features 120. The attachment features 120 of combustor panels 110 facilitate coupling and/or mounting of combustor panels 110 to the respective shells 104, 106 of combustor 56. In various embodiments, an attachment feature 120 may be a boss or a stud extending generally normal relative to the cooling surface 124 of the combustor panel 110. In various embodiments, the attachment feature 120 may be a cylindrical boss, such as a threaded pin, or may be a rectangular boss, such as for receiving a clip, or may be any other apparatus whereby a combustor panel 110 is mounted to combustor outer shell 104 or to combustor inner shell 106. Attachment feature 120 may be integral to (e.g., manufactured as part of) the combustor panel 110. In various embodiments, the attachment feature 120 comprises a threaded stud that extends through a corresponding aperture in combustor outer shell 104 or combustor inner shell 106, and is retained in position by an attachment nut 126 disposed, for example, outward of the combustor outer shell 104 and torqued so that the attachment feature 120 is preloaded with a retaining force and securely affixes the combustor panel 110 in a substantially fixed position relative to the combustor outer shell 104. Similarly, one or more attachment feature 120 may couple a combustor panel 110 to combustor inner shell 106.

Referring to FIGS. 3A and 3B, a combustor panel 110 may comprise a plurality of standoff pins 128 extending from combustor panel 110. In various embodiments, the standoff pins 128 may extend generally normal relative to the cooling surface 124 of combustor panel 110. The standoff pins 128 may mechanically contact the inner surface 103 of combustor outer shell 104 (or combustor inner shell 106) so that in response to the attachment nut 126 tightening, a gap is maintained between combustor panel 110 and combustor outer shell 104. The gap between combustor panel 110 and combustor outer shell 104 defines a cooling chamber 130, which may have an annular geometry.

Combustor outer shell 104 (and combustor inner shell 106) may define a plurality of apertures 140. In various embodiments, the cooling chamber 130 defined between combustor panel 110 and combustor outer shell 104 receives a cooling airflow F from outer plenum 90 through apertures 140. Cooling airflow F may have a higher pressure than hot airflow E, and thus, a pressure gradient may exist between air in hot airflow E and cooling airflow F. Cooling airflow F may enter cooling chamber 130 through apertures 140 due to the pressure gradient.

A plurality of cooling holes 142 may be defined in the combustor panel 110. Cooling holes 142 extend through combustor panel 110 from cooling surface 124 to combustion facing surface 122. In various embodiments, cooling holes 142 may be formed by drilling or creating holes into the sheet of material forming the combustor panel 110. Cooling airflow F may flow through cooling holes 142 in combustor panel 110 and into combustor chamber 102. Cooling holes 142 may be generally oriented to form a film of cooling airflow F over a portion of combustion facing surface 122.

Typically, film cooling holes cannot be formed in proximity to attachment studs and standoff pins, resulting in local hot spots on the combustor panel at each stud. The localized hot spots occur on the combustor panel adjacent and/or proximate to the attachment studs and standoff pins. Local hot spots create a temperature gradient across the combustor panel. In FIG. 3A of the present disclosure, the area defined by dashed line 146 schematically illustrates an area of a combustor panel that typically experienced higher temperatures, and now in the present invention is cooled by cooling airflow to reduce the temperature of the area generally defined by dashed line 146.

One or more channels 150 may be formed through an attachment feature 120, in order to permit a cooling flow, i.e. first cooling airflow F1, through the attachment feature 120. Channel 150 may provide film cooling of the area of combustion facing surface 122 proximate the attachment feature 120.

Channel 150 may extend completely through attachment feature 120 to combustion facing surface 122. In various embodiments, a channel 150 may include one or more inlets 154 and one or more outlets 156. Cooling airflow F flows into channel 150 through inlet 154, is directed through the channel 150, and exits channel 150 through outlet 156. Cooling airflow F flows into combustor chamber 102 and along combustion facing surface 122 of combustor panel 110. In various embodiments, combustor panel 110 having channel 150 formed through attachment feature 120 may be formed by additive manufacturing, injection molding, electrical discharge machining (EDM), composite fabrication, machining, forging, core casting, or other suitable process. Additively manufacturing a combustor panel 110 (or the core to cast the panel) may enable precisely forming the channel 150 through the attachment feature 120. Channel 150 may have various geometries to tailor the cooling flow through attachment feature 120 and over combustion facing surface 122.

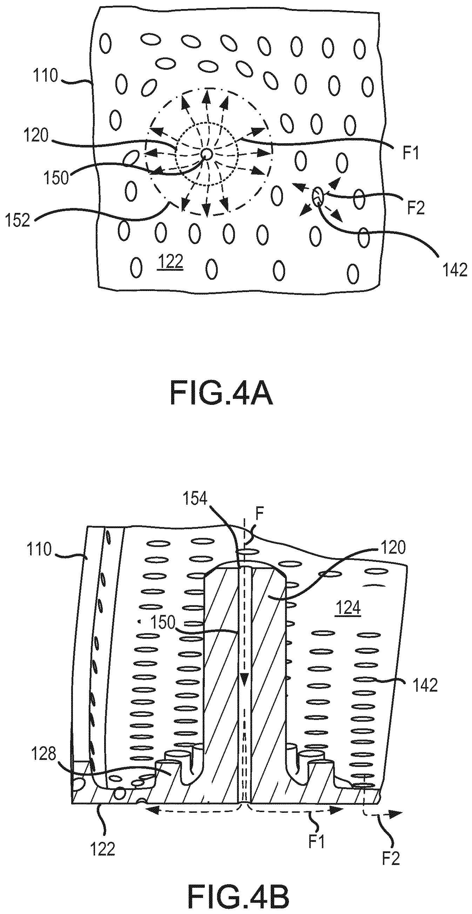

With reference to FIGS. 4A and 4B, a cooling airflow through a combustor panel is shown. FIG. 4A shows combustion facing surface 122 of combustor panel 110, and more specifically, the area of combustion facing surface 122 opposite a location of an attachment feature 120, which is on the cooling surface 124 combustor panel 110. Combustion facing surface 122 may receive a first cooling airflow F1 from channel 150 and a second cooling airflow F2 from cooling holes 142. First cooling airflow F1 and second cooling airflow F2 may provide film cooling to combustion facing surface 122.

The area within dashed line 152 schematically represents a first area of combustion facing surface 122 over which the first cooling airflow F1 from channel 150 is directed. The path of first cooling airflow F1 from channel 150 provides film cooling to the first area, which is opposite attachment feature 120 and standoff pins 128 (located on cooling surface 124). Cooling holes 142 may not be formed in first area (within dashed line 152), and thus, the first area may receive negligible amounts of second cooling airflow F2 from cooling holes 142. Thus, first cooling airflow F1 provides film cooling to first area, which may not be reachable by other cooling holes.

The area outside dashed line 152 schematically represents a second area of combustion facing surface 122 over which the second cooling airflow F2 is directed. The path of second cooling airflow F2 from cooling holes 142 provides film cooling to the second area, which is generally outside the first area and away from the location of attachment feature 120 and standoff pins 128.

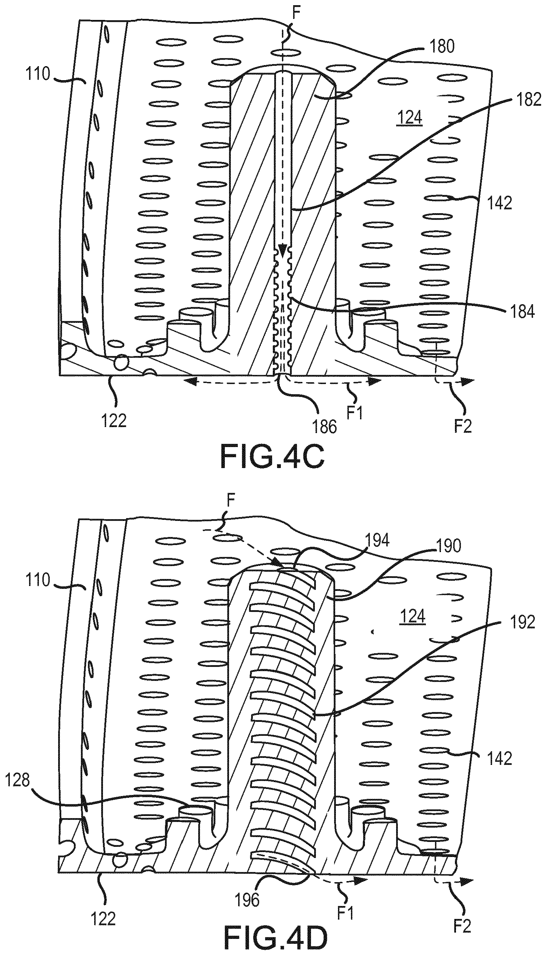

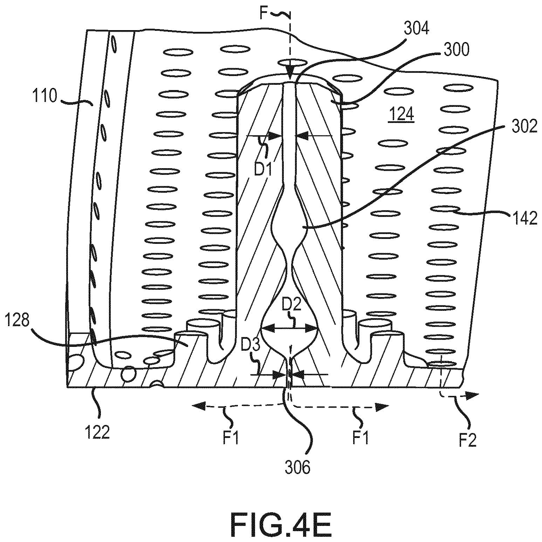

With reference to FIGS. 4C, 4D and 4E, a cooling airflow through a combustor panel is shown. In FIG. 4C, an attachment feature 180 of combustor panel 110 is shown having a channel 182 with a plurality of internal flow control features 184. Internal flow control features 184 may be trip strips (rib turbulators), pedestals, pin fins, bumps, dimples, and the like. Internal flow control features 184 may be designed to control the flow of cooling airflow F through channel 182, by increasing or decreasing turbulence, changing the flow area or the flow rate, and/or changing the flow direction at the outlet 186. Combustion facing surface 122 may receive a first cooling airflow F1 from channel 182 and a second cooling airflow F2 from cooling holes 142. In various embodiments, attachment feature 180 may be formed integrally with combustor panel 110 by additive manufacturing, with the internal flow control features 184 also being formed during the additive manufacturing of attachment feature 180 and combustor panel 110.

In FIG. 4D, an attachment feature 190 of combustor panel 110 is shown having a channel 192 with a spiral or helical path. The geometry of channel 192 may be selected to control flow through the channel 192 as well as the flow characteristics at the inlet 194 an outlet 196 of channel 192. Combustion facing surface 122 may receive a first cooling airflow F1 from channel 192 and a second cooling airflow F2 from cooling holes 142.

In FIG. 4E, an attachment feature 300 of combustor panel 110 is shown having a channel 302 with a cross sectional area or diameter that varies along a length of the channel 302. Channel 302 may have various diameters configured to control the flow of cooling airflow F by changing the flow area or the flow rate through the channel 302. For example, channel 302 may have a first diameter D1 proximal to inlet 304, and channel 302 may have a second diameter D2 at a point along channel 302 downstream of the first diameter D1. In various embodiments, the second diameter D2 of channel 302 may be different than the first diameter D1. For example, second diameter D2 of channel 302 may be greater than the first diameter D1. Channel 302 may further have a third diameter D3 downstream of the second diameter D2 and proximal to outlet 306. third diameter D3 of channel 302 may be different than, i.e., greater than or less than, the second diameter D2 and/or first diameter D1. The various diameters of channel 302 may be selected to control the flow of cooling airflow F through the channel 302 and flow rate of first cooling airflow F1 at the outlet 306. Combustion facing surface 122 may receive a first cooling airflow F1 from channel 302 and a second cooling airflow F2 from cooling holes 142.

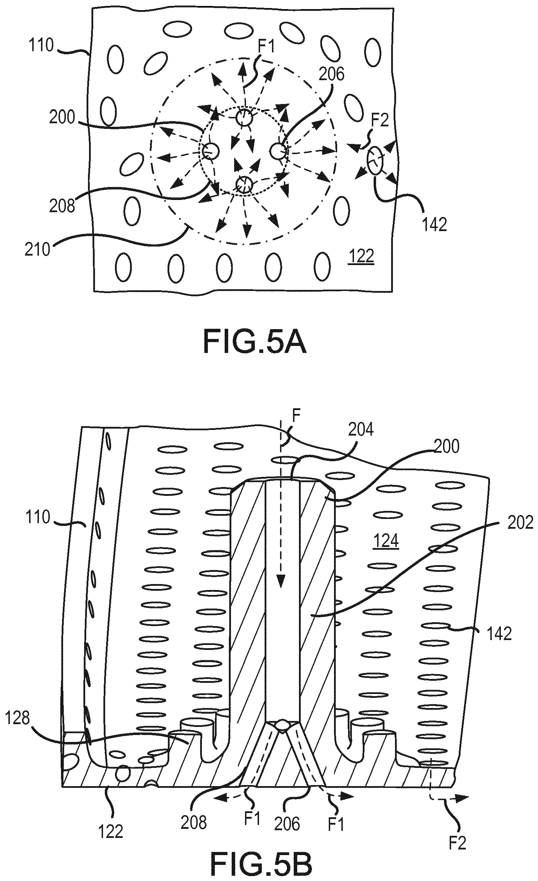

With reference to FIGS. 5A and 5B, a cooling panel having an attachment feature with a cooling channel having a plurality of outlets is shown. An attachment feature 200 of combustor panel 110 is shown having a channel 202 with an inlet 204 and a plurality of outlets 206. Channel 202 may split into a plurality of outlet channels 208, each having an outlet 206. Channel 202 and outlet channels 208 may be designed to control the flow of cooling airflow F, by changing the flow area or the flow rate, and/or changing the flow direction at outlets 206. Splitting the flow of first cooling airflow F1 among the plurality of outlet channels 208 may decrease the pressure drop between inlet 204 and outlets 206, in comparison with a single outlet design.

The area within dashed line 210 schematically represents a first area of combustion facing surface 122 over which the first cooling airflow F1 from channel 202 is directed. The plurality of outlets 206 may increase the overall surface area that first cooling airflow F1 covers, in comparison with a single outlet design. The path of first cooling airflow F1 from channel 202 provides film cooling to the first area, which is opposite attachment feature 200 and standoff pins 128 (located on cooling surface 124). Cooling holes 142 may not be formed in first area (within dashed line 152), and thus, the first area may receive negligible amounts of second cooling airflow F2 from cooling holes 142.

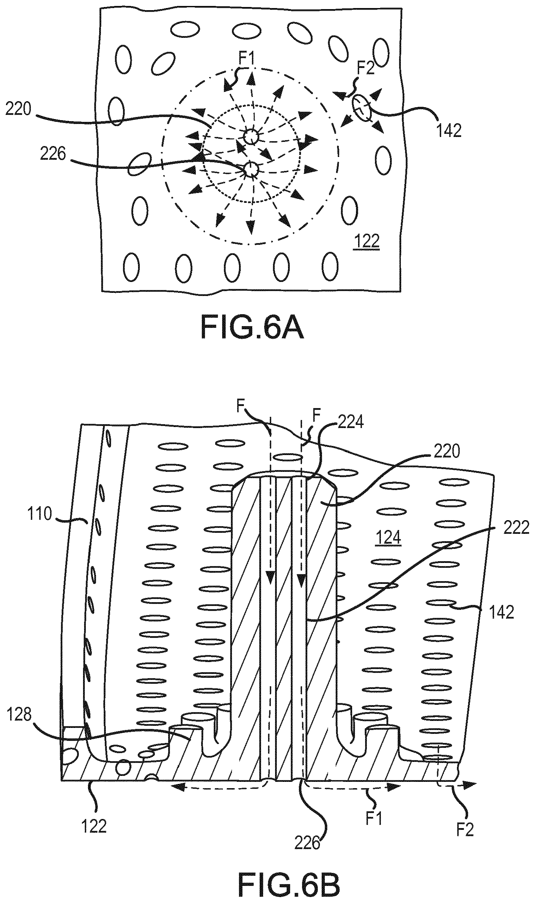

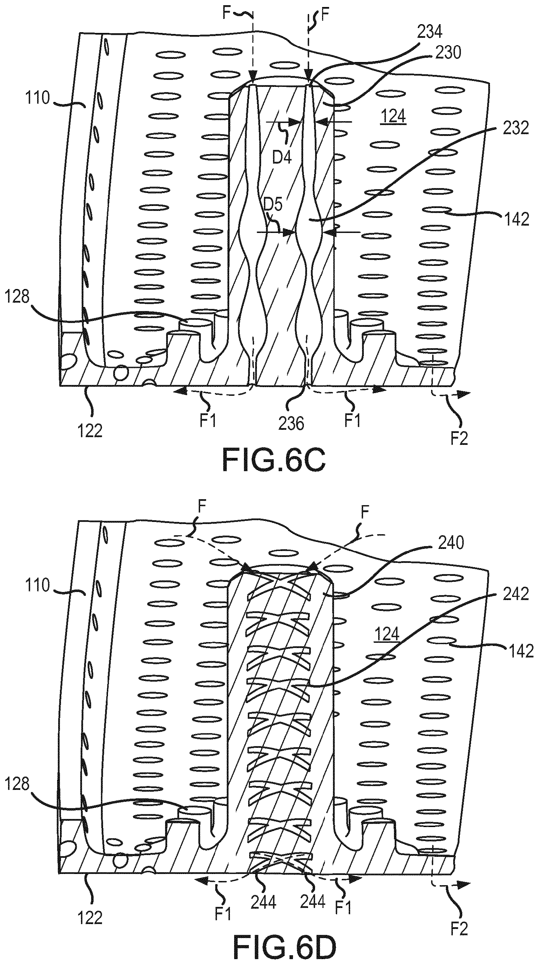

With reference to FIGS. 6A, 6B, 6C and 6D, cooling panels having attachment features with a plurality of cooling channel are shown. An attachment feature 220 of combustor panel 110 is shown having a plurality of channels 222, with each channel 222 having an inlet 224 and an outlet 226. Thus, attachment feature 220 comprises a plurality of inlets 224 and outlets 226. The multiple channels 222 may increase the overall surface area that first cooling airflow F1 covers, in comparison with a single channel design. Channels 222 may have various geometries to tailor the cooling flow through attachment feature 220 and over combustion facing surface 122. For example, channels 222 may have a linear geometry, curved geometry, helical geometry, serpentine geometry, irregular geometry, and/or the like.

FIG. 6C shows an attachment feature 230 with channels 232 having various diameters configured to control the flow of cooling airflow F by changing the flow area or the flow rate through the channel 232. A cross sectional area or diameter of channels 232 may vary along a length of the channel 232 between inlet 234 and outlet 236. For example, each of channels 232 may have a first diameter D4 proximal to inlets 234 and may have a second diameter D5 at a point along channels 232 downstream of the first diameter D4. In various embodiments, the second diameter D5 of channels 232 may be different than the first diameter D4. For example, second diameter D5 of channel 232 may be greater than the first diameter D4. The various diameters of channels 232 may be selected to control flow through the channels 232 and flow rate of first cooling airflow F1 at the outlets 236.

FIG. 6D shows an attachment feature 240 with a plurality of channels 242 having an spiral or helical flowpath. A first channel of the plurality of channels 242 and a second channel of the plurality of channels 242 may each have helical flowpath. Each outlet 244 of the plurality of channels 242 may direct first cooling flow F1 in a different direction. The channels may further comprise internal flow control features, such as trip strips (rib turbulators), pedestals, pin fins, bumps, dimples, and the like.

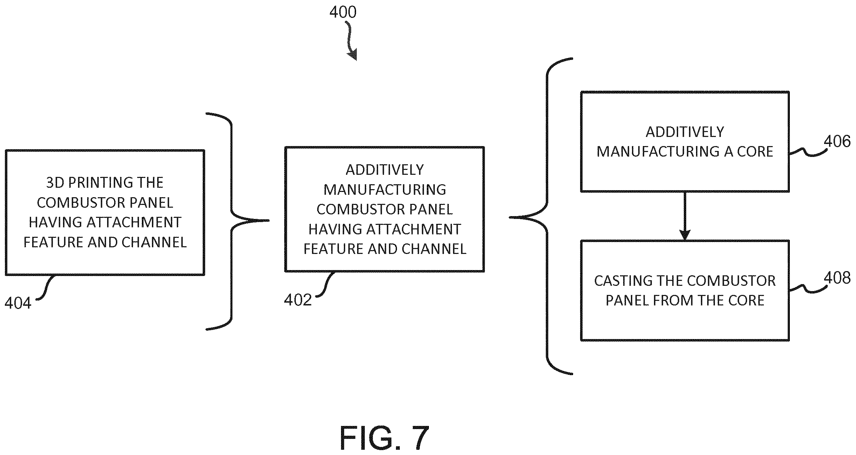

With reference to FIG. 7, a method of manufacturing a combustor is shown. The method 400 may include the step of additively manufacturing a combustor panel having an attachment feature integrally formed with the combustor panel and a channel formed completely through the attachment feature (step 402). Step 402 may further comprise additively manufacturing the combustor panel by three-dimensionally printing the combustor panel having the attachment feature and channel (step 404). Step 402 may further comprise additively manufacturing a core (step 406), and casting the combustor panel from the core (step 408). The combustor panel formed by core casting may have the attachment feature integrally formed with the combustor panel and the channel formed completely through the attachment feature. Thus, forming the combustor panel 110 using additive manufacturing methods may include integrally forming the combustor panel, attachment feature, channel, internal flow features of the channel, and/or cooling holes in the combustor panel. As used herein, the term "integrated" or "integral" may include forming one, single continuous piece.

As used herein, the term "additive manufacturing" encompasses any method or process whereby a three-dimensional object is produced by creation of a substrate or addition of material to an object, such as by addition of successive layers of a material to an object to produce a manufactured product having an increased mass or bulk at the end of the additive manufacturing process than the beginning of the process. A variety of additive manufacturing technologies are commercially available. Such technologies include, for example, fused deposition modeling, polyjet 3D printing, electron beam freeform fabrication, direct metal laser sintering, electron-beam melting, selective laser melting, selective heat sintering, selective laser sintering, stereolithography, multiphoton photopolymerization, digital light processing, and cold spray. These technologies may use a variety of materials as substrates for an additive manufacturing process, including various plastics and polymers, metals and metal alloys, ceramic materials, metal clays, organic materials, and the like.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A combustor panel (110) of a combustor (56), comprising:
a combustion facing surface (122);
a cooling surface (124) opposite the combustion facing surface (122); and
an attachment feature (120) extending from the cooling surface (124), the attachment feature (120) defining a first channel (150) extending through the attachment feature (120) to the combustion facing surface (122);
**characterised in that** the attachment feature (120) defines a second channel (222) extending through the attachment feature (120) to the combustion facing surface (122).

2. The combustor panel of claim 1, wherein the first channel (150) includes an internal flow control feature (184), wherein the internal flow control feature (184) comprises at least one of a trip strip or a bump.

3. The combustor panel of claim 1 or 2, wherein the first channel (150) includes a first cross sectional area having a first diameter (D1) and a second cross sectional area having a second diameter (D2), wherein the second diameter (D2) is greater than the first diameter (D1).

4. The combustor panel of claim 1, 2 or 3, wherein the first channel (150) comprises a plurality of outlets (156) in the combustion facing surface (122), wherein a cooling airflow (F1) exits the first channel (150) through the plurality of outlets (156) and is directed along the combustion facing surface (122).

5. The combustor panel of any preceding claim, wherein the first channel (150) and the second channel (222) form a helical flow path.

6. The combustor panel of any preceding claim, wherein the attachment feature (120) comprises an attachment stud.

7. The combustor panel of any preceding claim, further comprising a cooling hole (142) defined by the combustor panel (110) in a first area away from the attachment feature (120), wherein the cooling hole (142) directs a cooling airflow (F2) over a second area of the combustion facing surface (122) away from the first area.

8. A combustor (56) of a gas turbine engine (20), comprising:
an outer shell (104);
a combustor panel (110) as claimed in claim 1, wherein the combustor panel is mounted to the outer shell (104) by the attachment feature (120), wherein the attachment feature is integrally formed with the combustor panel (110);
wherein the first channel (150) is formed completely through the attachment feature (120), the first channel (150) configured to direct a first cooling airflow (F1) into a combustor chamber (102) of the combustor (56).

9. The combustor of claim 8, wherein the first channel (150) comprises a plurality of outlets (156) in a combustion facing surface (122) of the combustor panel (110), wherein a cooling airflow (F1) exits the first channel (150) through the plurality of outlets (156) and is directed along the combustion facing surface (122).

10. The combustor of claim 8 or 9, wherein the first channel (150) includes an internal flow control feature (184), the internal flow control feature (184) comprising at least one of a trip strip or a bump.

11. The combustor of claim 8, 9 or 10, wherein the second channel (222) is formed completely through the attachment feature (120),
wherein, optionally, the first channel (150) and the second channel (222) form a helical flow path.

12. The combustor of any of claims 8 to 11, wherein the first channel (150) includes a first cross sectional area having a first diameter (D1) and a second cross sectional area having a second diameter (D2), wherein the second diameter (D2) is greater than the first diameter (D1).

13. The combustor of any of claims 8 to 12, further comprising a standoff pin (128) extending from the combustor panel (110) adjacent to the attachment feature (120),
wherein, optionally, the cooling airflow (F1) exits the first channel (150) through a first outlet in a combustion facing surface (122) of the combustor panel, and wherein the first channel (150) directs the first cooling airflow (F1) over a first area of the combustion facing surface (122), the first area being opposite the attachment feature (120) and the standoff pin (128),
optionally further comprising a cooling hole (142) defined by the combustor panel (110) in a first area away from the attachment feature (120), wherein the cooling hole (142) directs a second cooling airflow (F2) over a second area of the combustion facing surface (122) away from the first area.

14. A gas turbine engine (20), comprising:
a combustor (56) having an outer shell (104) defining a combustor chamber (102);
an engine case (36) disposed about the combustor, the engine case and the outer shell defining an outer plenum (90) therebetween;
a combustor panel (110) as claimed in claim 1, wherein the combustor panel (110) is mounted to the outer shell (104) by the attachment feature (120),
wherein the first channel (150) is formed completely through the attachment feature (120), the first channel (150) configured to direct a cooling airflow (F1) from the outer plenum (90) into the combustor chamber (102).

15. The gas turbine engine of claim 14, wherein the first channel (150) comprises a plurality of outlets (156) in a combustion facing surface (122) of the combustor panel (110), wherein the cooling airflow (F1) exits the first channel (150) through the plurality of outlets (156) and is directed along the combustion facing surface (122),
wherein, optionally, the second channel (222) is formed completely through the attachment feature (120), the second channel (222) configured to direct the cooling airflow (F1) from the outer plenum (90) into the combustor chamber (102).

## Patentansprüche

1. Brennkammerwand (110) einer Brennkammer (56), umfassend:
eine verbrennungsseitige Fläche (122);
eine Kühlfläche (124) gegenüber der verbrennungsseitigen Fläche (122); und
eine Befestigungseinrichtung (120), die von der Kühlfläche (124) aus verläuft, wobei die Befestigungseinrichtung (120) einen ersten Kanal (150) definiert, der durch die Befestigungseinrichtung (120) zur verbrennungsseitigen Fläche (122) verläuft;
**dadurch gekennzeichnet, dass** die Befestigungseinrichtung (120) einen zweiten Kanal (222) definiert, der durch die Befestigungseinrichtung (120) zur verbrennungsseitigen Fläche (122) verläuft.

2. Brennkammerwand nach Anspruch 1, wobei der erste Kanal (150) eine innere Strömungsregelungseinrichtung (184) beinhaltet, wobei die innere Strömungsregelungseinrichtung (184) mindestens eines aus einem Stolperstreifen oder einer Erhebung umfasst.

3. Brennkammerwand nach Anspruch 1 oder 2, wobei der erste Kanal (150) eine erste Querschnittsfläche, die einen ersten Durchmesser (D1) aufweist, und eine zweite Querschnittsfläche beinhaltet, die einen zweiten Durchmesser (D2) aufweist, wobei der zweite Durchmesser (D2) größer als der erste Durchmesser (D1) ist.

4. Brennkammerwand nach Anspruch 1, 2 oder 3, wobei der erste Kanal (150) eine Vielzahl von Auslässen (156) in der verbrennungsseitigen Fläche (122) umfasst, wobei ein Kühlluftstrom (F1) aus dem ersten Kanal (150) durch die Vielzahl von Auslässen (156) austritt und entlang der verbrennungsseitigen Fläche (122) gelenkt wird.

5. Brennkammerwand nach einem der vorstehenden Ansprüche, wobei der erste Kanal (150) und der zweite Kanal (222) einen schraubenförmigen Strömungsweg bilden.

6. Brennkammerwand nach einem der vorstehenden Ansprüche, wobei die Befestigungseinrichtung (120) einen Befestigungszapfen umfasst.

7. Brennkammerwand nach einem der vorstehenden Ansprüche, ferner umfassend ein Kühlloch (142), das von der Brennkammerwand (110) in einem ersten Bereich von der Befestigungseinrichtung (120) entfernt definiert ist, wobei das Kühlloch (142) einen Kühlluftstrom (F2) über einen zweiten Bereich der verbrennungsseitigen Fläche (122) von dem ersten Bereich entfernt lenkt.

8. Brennkammer (56) eines Gasturbinentriebwerks (20), umfassend:
eine Außenhülle (104);
eine Brennkammerwand (110) nach Anspruch 1, wobei die Brennkammerwand an der Außenhülle (104) durch die Befestigungseinrichtung (120) montiert ist, wobei die Befestigungseinrichtung integral mit der Brennkammerwand (110) ausgebildet ist;
wobei der erste Kanal (150) vollständig durch die Befestigungseinrichtung (120) ausgebildet ist, wobei der erste Kanal (150) konfiguriert ist, um einen ersten Kühlluftstrom (F1) in einen Brennkammerraum (102) der Brennkammer (56) zu leiten.

9. Brennkammer nach Anspruch 8, wobei der erste Kanal (150) eine Vielzahl von Auslässen (156) in einer verbrennungsseitigen Fläche (122) der Brennkammerwand (110) umfasst, wobei ein Kühlluftstrom (F1) aus dem ersten Kanal (150) durch die Vielzahl von Auslässen (156) austritt und entlang der verbrennungsseitigen Fläche (122) gelenkt wird.

10. Brennkammer nach Anspruch 8 oder 9, wobei der erste Kanal (150) eine innere Strömungsregelungseinrichtung (184) beinhaltet, wobei die innere Strömungsregelungseinrichtung (184) mindestens eines aus einem Stolperstreifen oder einer Erhebung umfasst.

11. Brennkammer nach Anspruch 8, 9 oder 10, wobei der zweite Kanal (222) vollständig durch die Befestigungseinrichtung (120) ausgebildet ist,
wobei der erste Kanal (150) und der zweite Kanal (222) optional einen schneckenförmigen Strömungsweg bilden.

12. Brennkammer nach einem der Ansprüche 8 bis 11, wobei der erste Kanal (150) eine erste Querschnittsfläche, die einen ersten Durchmesser (D1) aufweist, und eine zweite Querschnittsfläche beinhaltet, die einen zweiten Durchmesser (D2) aufweist, wobei der zweite Durchmesser (D2) größer als der erste Durchmesser (D1) ist.

13. Brennkammer nach einem der Ansprüche 8 bis 12, ferner umfassend einen Abstandszapfen (128), der sich von der Brennkammerwand (110) angrenzend an die Befestigungseinrichtung (120) erstreckt,
wobei optional der Kühlluftstrom (F1) aus dem ersten Kanal (150) über einen ersten Auslass in einer verbrennungsseitigen Fläche (122) der Brennkammerwand austritt, und wobei der erste Kanal (150) den ersten Kühlluftstrom (F1) über einen ersten Bereich der verbrennungsseitigen Fläche (122) leitet, wobei der erste Bereich gegenüber der Befestigungseinrichtung (120) und dem Abstandszapfen (128) liegt,
optional ferner umfassend ein Kühlloch (142), das von der Brennkammerwand (110) in einem ersten Bereich von der Befestigungseinrichtung (120) entfernt definiert ist, wobei das Kühlloch (142) einen zweiten Kühlluftstrom (F2) über einen zweiten Bereich der verbrennungsseitigen Fläche (122) von dem ersten Bereich entfernt leitet.

14. Gasturbinentriebwerk (20), umfassend:
eine Brennkammer (56), die eine Außenhülle (104) aufweist, die einen Brennkammerraum (102) definiert;
ein Triebwerksgehäuse (36), das um den Brennraum angeordnet ist, wobei das Triebwerksgehäuse und die Außenhülle einen Außenraum (90) dazwischen definieren;
eine Brennkammerwand (110) nach Anspruch 1, wobei die Brennkammerwand (110) an der Außenhülle (104) durch die Befestigungseinrichtung (120) montiert ist,
wobei der erste Kanal (150) vollständig durch die Befestigungseinrichtung (120) ausgebildet ist, wobei der erste Kanal (150) konfiguriert ist, um einen Kühlluftstrom (F1) von dem Außenraum (90) in den Brennkammerraum (102) zu leiten.

15. Gasturbinentriebwerk nach Anspruch 14, wobei der erste Kanal (150) eine Vielzahl von Auslässen (156) in einer verbrennungsseitigen Fläche (122) der Brennkammerwand (110) umfasst, wobei der Kühlluftstrom (F1) aus dem ersten Kanal (150) durch die Vielzahl von Auslässen (156) austritt und entlang der verbrennungsseitigen Fläche (122) geleitet wird,
wobei optional der zweite Kanal (222) vollständig durch die Befestigungseinrichtung (120) ausgebildet ist, wobei der zweite Kanal (222) konfiguriert ist, um den Kühlluftstrom (F1) von dem Außenraum (90) in den Brennkammerraum (102) zu leiten.

## Revendications

1. Panneau thermique (110) d'un dispositif de combustion (56), comprenant :
une surface exposée à la combustion (122) ;
une surface de refroidissement (124) opposée à la surface exposée à la combustion (122) ; et
un élément de bouclier (120) s'étendant depuis la surface de refroidissement (124), l'élément de bouclier (120) définissant un premier canal (150) s'étendant à travers l'élément de bouclier (120) jusqu'à la surface exposée à la combustion (122) ;
**caractérisé en ce que** l'élément de bouclier (120) définit un second canal (222) s'étendant à travers l'élément de bouclier (120) jusqu'à la surface exposée à la combustion (122).

2. Panneau thermique selon la revendication 1, dans lequel le premier canal (150) inclut un élément de commande de flux interne (184), dans lequel l'élément de commande de flux interne (184) comprend au moins l'une d'une bande de déclenchement ou d'une bosse.

3. Panneau thermique selon la revendication 1 ou 2, dans lequel le premier canal (150) inclut une première zone de section transversale présentant un premier diamètre (D1) et une seconde zone de section transversale présentant un second diamètre (D2), dans lequel le second diamètre (D2) est supérieur au premier diamètre (D1).

4. Panneau thermique selon la revendication 1, 2 ou 3, dans lequel le premier canal (150) comprend une pluralité de sorties (156) dans la surface exposée à la combustion (122), dans lequel un flux d'air de refroidissement (F1) sort du premier canal (150) par la pluralité de sorties (156) et est dirigé le long de la surface exposée à la combustion (122).

5. Panneau thermique selon une quelconque revendication précédente, dans lequel le premier canal (150) et le second canal (222) forment un trajet d'écoulement hélicoïdal.

6. Panneau thermique selon une quelconque revendication précédente, dans lequel l'élément de bouclier (120) comprend un goujon de bouclier.

7. Panneau thermique selon une quelconque revendication précédente, comprenant en outre un trou de refroidissement (142) défini par le panneau thermique (110) dans une première zone éloignée de l'élément de bouclier (120), dans lequel le trou de refroidissement (142) dirige un flux d'air de refroidissement (F2) sur une seconde zone de la surface exposée à la combustion (122) éloignée de la première zone.

8. Dispositif de combustion (56) d'un moteur à turbine à gaz (20), comprenant :
une enveloppe externe (104) ;
un panneau thermique (110) selon la revendication 1, dans lequel le panneau thermique est monté sur l'enveloppe externe (104) par l'élément de bouclier (120), dans lequel l'élément de bouclier est formé intégralement avec le panneau thermique (110) ;
dans lequel le premier canal (150) est formé complètement à travers l'élément de bouclier (120), le premier canal (150) étant configuré pour diriger un premier flux d'air de refroidissement (F1) dans une chambre de dispositif de combustion (102) du dispositif de combustion (56).

9. Dispositif de combustion selon la revendication 8, dans lequel le premier canal (150) comprend une pluralité de sorties (156) dans une surface exposée à la combustion (122) du panneau thermique (110), dans lequel un flux d'air de refroidissement (F1) sort du premier canal (150) par la pluralité de sorties (156) et est dirigé le long de la surface exposée à la combustion (122).

10. Dispositif de combustion selon la revendication 8 ou 9, dans lequel le premier canal (150) inclut un élément de commande de flux interne (184), l'élément de commande de flux interne (184) comprenant au moins l'une d'une bande de déclenchement ou d'une bosse.

11. Dispositif de combustion selon la revendication 8, 9 ou 10, dans lequel le second canal (222) est formé complètement à travers l'élément de bouclier (120),
dans lequel, éventuellement, le premier canal (150) et le second canal (222) forment un trajet d'écoulement hélicoïdal.

12. Dispositif de combustion selon la revendication 8 ou 11, dans lequel le premier canal (150) inclut une première zone de section transversale présentant un premier diamètre (D1) et une seconde zone de section transversale présentant un second diamètre (D2), dans lequel le second diamètre (D2) est supérieur au premier diamètre (D1).

13. Dispositif de combustion selon l'une quelconque des revendications 8 à 12, comprenant en outre une broche de maintien (128) s'étendant depuis le panneau thermique (110) de manière adjacente à l'élément de bouclier (120),
dans lequel, éventuellement, le flux d'air de refroidissement (F1) sort du premier canal (150) par une première sortie dans une surface exposée à la combustion (122) du panneau thermique, et dans lequel le premier canal (150) dirige le premier flux d'air de refroidissement (F1) sur une première zone de la surface exposée à la combustion (122), la première zone étant opposée à l'élément de bouclier (120) et à la broche de maintien (128),
comprenant éventuellement en outre un trou de refroidissement (142) défini par le panneau thermique (110) dans une première zone éloignée de l'élément de bouclier (120), dans lequel le trou de refroidissement (142) dirige un second flux d'air de refroidissement (F2) sur une seconde zone de la surface exposée à la combustion (122) éloignée de la première zone.

14. Moteur à turbine à gaz (20), comprenant :
un dispositif de combustion (56) présentant une enveloppe externe (104) définissant une chambre de dispositif de combustion (102) ;
un carter de moteur (36) disposé autour du dispositif de combustion, le carter de moteur et l'enveloppe externe définissant un plénum externe (90) entre eux ;
un panneau thermique (110) selon la revendication 1, dans lequel le panneau thermique (110) est monté sur l'enveloppe externe (104) par l'élément de bouclier (120),
dans lequel le premier canal (150) est formé complètement à travers l'élément de bouclier (120), le premier canal (150) étant configuré pour diriger un flux d'air de refroidissement (F1) depuis le plénum externe (90) dans la chambre de dispositif de combustion (102).

15. Moteur à turbine à gaz selon la revendication 14, dans lequel le premier canal (150) comprend une pluralité de sorties (156) dans une surface exposée à la combustion (122) du panneau thermique (110), dans lequel le flux d'air de refroidissement (F1) sort du premier canal (150) par la pluralité de sorties (156) et est dirigé le long de la surface exposée à la combustion (122),
dans lequel, éventuellement, le second canal (222) est formé complètement à travers l'élément de bouclier (120), le second canal (222) étant configuré pour diriger le flux d'air de refroidissement (F1) depuis le plénum externe (90) dans la chambre de dispositif de combustion (102).
